# EUROPÄISCHE PATENTSCHRIFT

(11) **EP 1 880 936 B1**
(45) Veröffentlichungstag und Bekanntmachung des Hinweises auf die Patenterteilung: **15.09.2010**
(21) Anmeldenummer: 07013336.8
(22) Anmeldetag: 07.07.2007
(51) Int. Cl.: B62K 25/06, F16F 9/53

(54) **Dämpfer**
Damper
Amortisseur

(30) Priorität: 20.07.2006 DE 102006033565
(43) Veröffentlichungstag der Anmeldung: 23.01.2008
(73) Patentinhaber: Gustav Magenwirth GmbH & Co. KG, 72574 Bad Urach (DE)
(72) Erfinder: Künstle, Reiner, 72555 Metzingen (DE)
(74) Vertreter: Maucher, Wolfgang

(56) Entgegenhaltungen:
- EP-A- 1 394 439
- DE-B3- 10 320 005
- JP-A- 6 010 984
- JP-A- 7 091 479
- JP-A- 59 006 448
- US-A- 6 158 470
- US-B1- 6 279 702

## Beschreibung

Die Erfindung bezieht sich auf einen Dämpfer, insbesondere für Zweiräder, der einen Zylinder und einen darin geführten Dämpfungskolben aufweist, wobei beiderseitig des Dämpfungskolbens befindliche Zylinderräume mit Flüssigkeit als Dämpfungsmedium gefüllt sind, wobei für einen Einfedervorgang eine Druckstufendämpfung und für einen Ausfedervorgang eine Zugstufendämpfung vorgesehen ist und wobei zumindest eine der beiden Dämpfungen elektrorheologisch oder magnetorheologisch einstellbar ist.
Dabei kann sowohl die Druckstufendämpfung als auch die Zugstufendämpfung elektrorheologisch oder magnetorheologisch regulierbar sein oder eine der beiden Dämpfungen ist elektrorheologisch oder magnetorheologisch und die andere hydraulisch regulierbar.
Bei der elektrorheologischen Dämpfung befindet sich die Dämpferflüssigkeit zwischen Elektroden, an die eine elektrische Spannung anlegbar ist, während sich die Dämpferflüssigkeit bei der magnetorheologischen Dämpfung in einem (elektro-) magnetischen Feld befindet.

Bekannt sind Dämpfer, deren Druck- oder Zugstufe über einen in einem Zylinder geführten Kolben gedämpft ist, wobei die Zylinderkammern in der Regel durch Verbindungskanäle mit Rückschlagventilen miteinander verbunden sind (Newtonsche Dämpfung). Die Einstellung der Zug- und Druckstufe kann dabei durch verstellbare Drosseln separat erfolgen. Es sind auch Dämpfer bekannt, bei denen die Druckstufe dynamisch elektrorheologisch oder magnetorheologisch und die Zugstufe statisch hydraulisch gedämpft ist. Eine unabhängige Anpassung der Zug- und Druckstufendämpfung sowie eine dynamische Anpassung der Zugstufe an die jeweilige Fahrsituation ist bei diesen Dämpfern allerdings nicht möglich.

Bei Dämpfern, die über den elektrorheologischen oder magnetorheologischen Effekt die Dämpferkraft variieren, kann die Veränderung statisch bzw. quasistatisch erfolgen, so dass sie sich während des Betriebes nicht ändert, oder dynamisch (gesteuert oder geregelt), so dass sie während des Betriebes laufend verändert wird, was vorzugsweise mit einer Elektronik, die aufgrund von Sensoren die Fahrsituation ermittelt, erfolgen kann.

Insbesondere für eine dynamische Regulierung der Druck- und Zugstufendämpfung sind auch rein elektrorheologisch gesteuerte Systeme bekannt, bei denen die Druckstufe und die Zugstufe unterschiedlich bedämpft sind. Dies kann beispielsweise über einen Differentialkolben erfolgen.

Aus der DE 103 20 005 B3 ist ein Schwingungsdämpfer bekannt, der mit einem Zylinder und einem darin beweglichen Kolben an einer Kolbenstange und einer Mediumfüllung, deren Viskosität in Abhängigkeit der Ansteuerung eines elektrischen Felderzeugungselements änderbar ist, ausgestattet ist, wodurch die Dämpfkraft des Schwingungsdämpfers beeinflussbar ist.

Dieser Schwingungsdämpfer besitzt zwei unabhängige Felderzeugungselemente, die auf zwei getrennte Drosselstrecken wirken. Dabei sind die Felderzeugungselemente außerhalb des Zylinders angeordnet. Das erzeugte Feld ist in den Drosselstrecken wirksam, die ebenfalls außerhalb des Zylinders angeordnet sind. Beim Ein- und Ausfedern des Schwingungsdämpfers wird das Füllmedium durch diese Drosselstrecken gepumpt, wobei die Viskosität des Mediums durch das Feld veränderbar ist. Zusätzlich weisen die beiden Drosselstreckeneinsätze jeweils Rückflussventile auf, die in entgegengesetzten Richtungen wirken und gegenüber dem Feld abgeschirmt sind, so dass das Medium jeweils in einer Richtung durch eines der nicht-feldbeaufschlagten Ventile fließen kann. Für den Ein- und Ausfedervorgang sind daher jeweils getrennte Dämpfungscharakteristiken einstellbar.

Diese Anordnung weist jedoch trotzdem einen hohen Energiebedarf auf, da zwei Spulen permanent mit Strom versorgt werden müssen.

Es besteht daher die Aufgabe, mit geringem Aufwand, insbesondere ohne sensorabhängige Regulierung, bei einem Dämpfer, der zumindest eine elektrorheologische oder magnetorheologische Dämpfungsstufe aufweist, eine unabhängig einstellbare Druck- und Zugstufendämpfung zu schaffen.

Zur Lösung schlägt die Erfindung im wesentlichen vor, dass die Druckstufendämpfung elektrorheologisch oder magnetorheologisch und die Zugstufendämpfung hydraulisch regulierbar ist.

Dadurch können jeweils voneinander unabhängige Einstellungen/Verstellungen einerseits der Zugstufendämpfung und andererseits der Druckstufendämpfung vorgenommen werden. Eine unerwünschte Beeinflussung der jeweils anderen Dämpfung beim Verstellen einer der beiden Dämpfungen wird dadurch vermieden.

Bei dem erfindungsgemäßen Dämpfer und einer elektrorheologischen Dämpfung ist der Aufwand auch deshalb wesentlich geringer, da keine Sensoren und entsprechend keine Verarbeitung von Messsignalen notwendig sind. Außerdem kann ein langsameres, einfacher konzipiertes Gerät zur Erzeugung der Hochspannung für die Ansteuerung der elektrorheologischen Dämpfung verwendet werden.

Bei Einsatz einer elektrorheologischen Druckstufendämpfung in Verbindung mit der erfindungsgemäßen Ausbildung ist auch bei einem Spannungsausfall eine hohe Funktionssicherheit des Dämpfers gegeben und damit ein sicherer Fahrbetrieb, da die Zugstufendämpfung davon unbeeinflusst bleibt.

Bei einem Dämpfer nach dem Stand der Technik mit einem elektrorheologischen System für die Druckstufendämpfung und Zugstufendämpfung wäre in diesem Fall, also einem Spannungsausfall, die Zugstufendämpfung zu gering, so dass z.B. bei einer Federgabel das Vorderrad vom Boden abheben und springen würde, was die Fahrsicherheit erheblich beeinträchtigt.

Durch die erfindungsgemäße Ausführung des Dämpfers ist auch ein Fahrbetrieb mit erhöhter ER-Spannung problemlos möglich. Dabei kann mit der ER-Spannung eine beliebig hohe Druckstufendämpfung eingestellt werden, ohne die Zugstufendämpfung zu beeinflussen. Dies ist z.B. von Vorteil, wenn beim Fahrrad das Wippen beim Pedalieren unterdrückt werden soll.

Eine Möglichkeit, die Druckstufe zu bedämpfen, besteht darin, eine ER-Spannung fest einzustellen. Durch die elektrorheologisch veränderten Eigenschaften der Hydraulikflüssigkeit ist die Druckstufendämpfung in diesem Fall in Abhängigkeit von der angelegten Spannung bis zu einer gewissen Kraftschwelle relativ hoch. Oberhalb dieser Kraftschwelle, d.h. sobald sich eine bestimmte Dämpfergeschwindigkeit einstellt, wird die Kraft bei ER-Dämpfern deutlich geringer. Dies wirkt sich in der Praxis so aus, dass Bewegungen bis zu einer bestimmten Kraftschwelle, unterdrückt werden und oberhalb dieser Kraftschwelle die Druckstufendämpfung gering genug ist, um ein schnelles Einfedern zu ermöglichen. Die Abkopplung von Druckstufendämpfung und Zugstufendämpfung voneinander bewirkt, dass die Zugstufendämpfung nicht über den elektrorheologischen Dämpfer beeinflusst wird, so dass das Federelement ausreichend schnell wieder ausfedern und somit den nächsten Kraftimpuls aufnehmen kann. Es ist also ein Fahrbetrieb bei hoher ER-Spannung möglich und es wird verhindert, dass in diesem Fall das Federelement zu langsam oder nicht vollständig ausfedert, wie dies bei bisherigen reinen ER-Dämpfern der Fall ist und wodurch die Fahrsicherheit bisher nachteilig beeinflusst wurde.

Wird die ER-Spannung vom Bediener fest eingestellt, so legt er dadurch die Ansprechschwelle des Federelementes fest. Selbst bei sehr hoher Ansprechschwelle (Lockout-Modus) spricht das Federelement bei starken Schlägen an, wodurch sich eine Fail-save Funktion in der Form ergibt, dass z.B. ein Mountainbiker bei einem unerwarteten Hindernis nicht einen so starken Schlag erhält, dass er in Gefahr gerät, zu stürzen. Speziell in diesem Fall ist es notwendig, dass die Zugstufe geringer als die Druckstufe bedämpft ist, so dass die Gabel wieder ausfedert.

Dies ist mit dem erfindungsgemäßen Dämpfer ermöglicht, so dass ein solches Federelement auch eine ausreichende Sicherheit bei Fehlgebrauch ergibt in der Form, dass mit blockierter Dämpfung über ein Hindernis oder in rauem Gelände gefahren wird.

Eine vorteilhafte Weiterbildung der Erfindung sieht vor, dass bei einer elektrorheologischen Dämpfung, insbesondere einer elektrorheologischen Druckstufendämpfung, eine Mess- und Einstellvorrichtung zur Messung oder Stromaufnahme der elektrorheologischen Dämpfungseinrichtung und zur Verstellung der Dämpfung in Abhängigkeit der Stromaufnahme vorgesehen ist. Damit kann eine Detektierung der Fahrsituation über die Stromaufnahme der elektrorheologischen Dämpfungseinrichtung erfolgen. Die Bewegungen im Dämpfer bei einer elektrorheologischen Dämpfung führen mit zunehmender Bewegung zu einer messbaren Erhöhung der Stromaufnahme, so dass ohne zusätzliche Sensorik ein Federelement realisiert werden kann, das bei starken Unebenheiten die Druckstufendämpfung praktisch selbsttätig über die Mess- und Einstellvorrichtung reduziert. Dies bedeutet, dass eine Umschaltung von stark gedämpftem Modus auf komfortablen Modus erfolgt, ohne dass dazu Sensoren oder eine manuelle Verstellung notwendig sind. Dabei ist das System in jedem Betriebsmodus fahrbar.

Zur Abkopplung und Trennung der Strömungswege für die Druckstufendämpfung und die Zugstufendämpfung sind die Zugstufendämpfung und die Druckstufendämpfung über Rückschlagventile voneinander getrennt. Dies lässt sich technisch vergleichsweise einfach realisieren und ist störunanfällig.

Zudem ist aufgrund der Trennung in beispielsweise elektrorheologische Druckstufendämpfung und hydraulische Zugstufendämpfung der Energieverbrauch des Dämpfers insgesamt gegenüber reinen elektrorheologischen Systemen reduziert.

Bei einer elektrorheologischen Regulierung der Druckstufendämpfung und einer hydraulischen Regulierung der Zugstufendämpfung kann die Einstellung der Zugstufendämpfung über eine verstellbare Drossel erfolgen, was in der Regel einmal in Anpassung an das Gewicht und die Bedürfnisse des Fahrers vorgenommen wird. Die Druckstufe wird über ein ER-Ventil bedämpft, wobei die Einstellung der Druckstufendämpfung über die ER-Spannung erfolgt.

Eine Ausführungsform des erfindungsgemäßen Dämpfers sieht vor, dass als Teil einer elektrorheologischen Druckstufendämpfung der Zylinder einen Ringspaltraum zwischen einer inneren und einer äußeren Zylinderwand aufweist.

Dabei werden die innere und äußere Zylinderwand zur Steuerung der Fließeigenschaften der sich im Ringspaltraum befindlichen Hydraulikflüssigkeit spannungsbeaufschlagt. Zur Abstandshaltung der inneren und äußeren Zylinderwand sind diese durch ein elektrisch isolierendes Verbindungsstück verbunden und bilden zur elektrorheologischen Beaufschlagung des im Ringspaltraum befindlichen Hydraulikmediums Elektroden.

Um ein geschlossenes Hydraulikflüssigkeitssystem mit dennoch abgekoppelten Strömungswegen zu erhalten, ist der Ringspaltraum mit dem bei Druckbeaufschlagung einen Kompressionsraum bildenden Druckstufen-Zylinderraum direkt und mit dem bei Zugbeaufschlagung einen Kompressionsraum bildenden Zugstufen-Zylinderraum über ein Druckstufen-Rückschlagventil, das zur Durchströmung vom Ringspaltraum zum Zugstufen-Zylinderraum öffnet, verbunden.

Zur Durchströmung der Hydraulikflüssigkeit vom Zugstufen-Zylinderraum in den Druckstufen-Zylinderraum kann zwischen den beiden Zylinderräumen, vorzugsweise integriert in den Dämpfungskolben, ein Zugstufen-Rückschlagventil angeordnet sein, das zur Durchströmung vom Zugstufen-Zylinderraum in den Druckstufen-Zylinderraum öffnet.
Das Zugstufen-Rückschlagventil kann zur Beeinflussung der Dämpfungscharakteristik der Zugstufendämpfung insbesondere durch Verstellung der Belastung eines Ventilschließorgans verstellbar sein. Dadurch ist der Durchfluss von Dämpfungsmedium durch das Zugstufen-Rückschlagventil einstellbar.

Zum Ausgleich zum Beispiel temperaturbedingter Volumenschwankungen des Hydraulikmediums kann ein Ausgleichsbehälter mit einem darin geführten Trennkolben mit der inneren Zylinderwand verbunden sein. Dabei es besonders vorteilhaft, wenn der Ausgleichsbehälter als zylinderförmiger Aufsatz auf der inneren Zylinderwand ausgebildet ist und wenn das isolierende Verbindungsstück zum Verbinden und zur axialen Fixierung der inneren Zylinderwand dient.

Um eventuell sich in der Hydraulikflüssigkeit befindliche gasförmige Anteile, wie zum Beispiel Luftblasen, welche die Funktion des Dämpfers beeinträchtigen können, zu entfernen, ist es zweckmäßig, wenn der Trennkolben eine Aufnahmekammer als Auffangeinrichtung für die gasförmigen Anteile aufweist und die Aufnahmekammer des Trennkolbens mit dem Druckstufen-Zylinderraum über wenigstens einen Verbindungskanal verbunden ist. Auf diese Weise können die gasförmigen Anteile aus der Hydraulikflüssigkeit vom Trennkolben aufgenommen und festgehalten werden.

Eine Ausführungsform des erfindungsgemäßen Dämpfers sieht vor, dass der obere Endbereich des Innenrohrs als Ausgleichsbehälter dient. Gegebenenfalls kann dabei die innere Zylinderwand an ihrem oberen Endbereich eine stufenartige Querschnittsverringerung aufweisen und das Verbindungsstück auf diese Stufe aufgesetzt werden.

In einer weiteren Ausführungsform des erfindungsgemäßen Dämpfers weist der Ausgleichsbehälter an seinem äußeren Ende eine durch den Trennkolben abgetrennte äußere Kammer auf, die als dichte Luftkammer ausgebildet ist.
Somit dient das in der Luftkammer befindliche Gasvolumen oberhalb des Trennkolbens gleichzeitig als Luftfeder und zusätzliches Dämpfungselement.

Um die Luftmenge in der Luftkammer zum Beispiel zur Veränderung der Dämpfungseigenschaften variieren zu können, ist es zweckmäßig, wenn der Ausgleichsbehälter beziehungsweise die Luftkammer einen Verschlussdeckel aufweist, der ein vorzugsweise als Einschraubventil ausgebildetes Luftventil hat.

Der erfindungsgemäße Dämpfer ist in jedem hydraulischen Zug-/Drucksystem einsetzbar. Vorteilhaft ist es jedoch, wenn der Dämpfer Teil einer Federgabel und/oder eines Federbeins für Hinterbauten, insbesondere bei Zweirädern, ist, da Zweiräder aufgrund ihres Einsatzbereichs ein besonders flexibles Dämpfungssystem benötigen, um eine hohe Fahrsicherheit und einen angemessenen Fahrkomfort zu bieten.

Die Erfindung ist nachfolgend anhand des in den Zeichnungen dargestellten Ausführungsbeispiels näher erläutert. Es zeigt in teilweise schematisierter Darstellung:
- Fig. 1: einen Längsschnitt durch einen Teil eines erfindungsgemäßen Dämpfers,
- Fig. 2: einen Längsschnitt durch den erfindungsgemäßen Dämpfer im Bereich des Dämpferkolbens mit in Offenstellung befindlichem Nadelventil,
- Fig. 3: einen Längsschnitt durch den erfindungsgemäßen Dämpfer im Bereich des Dämpferkolbens mit in Schließstellung befindlichem Nadelventil sowie
- Fig. 4: einen Längsschnitt durch den erfindungsgemäßen Dämpfer im Bereich eines Verbindungsstückes.

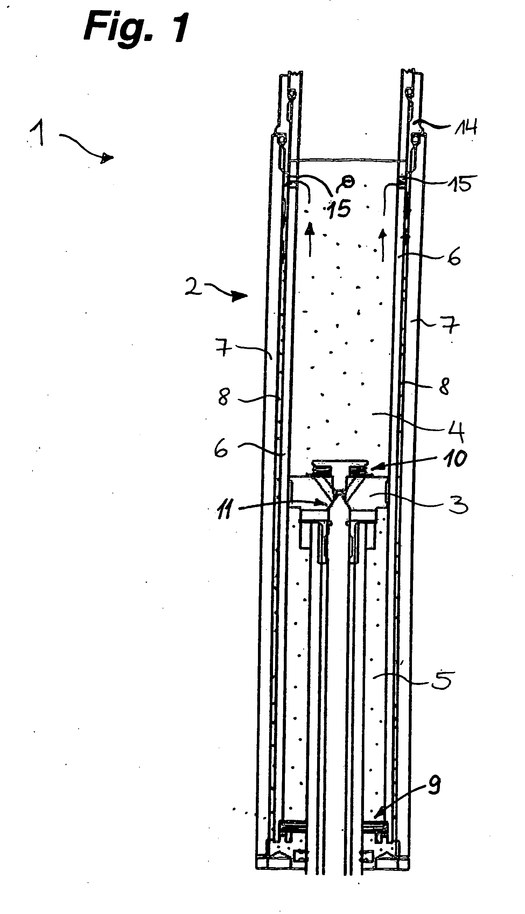

Ein in Fig. 1 im ganzen mit 1 bezeichneter Dämpfer weist einen Zylinder 2 und einen darin geführten Dämpfungskolben 3 auf, wobei beiderseitig des Dämpfungskolbens 3 befindliche Zylinderräume 4,5 sowie ein von einer inneren Zylinderwand 6 und einer äußeren Zylinderwand 7 gebildeter Ringspaltraum 8 mit Flüssigkeit als Dämpfungsmedium gefüllt sind. Der eine Zylinderraum bildet einen Druckstufen-Zylinderraum 4 und der andere Zylinderraum einen Zugstufen-Zylinderraum 5.

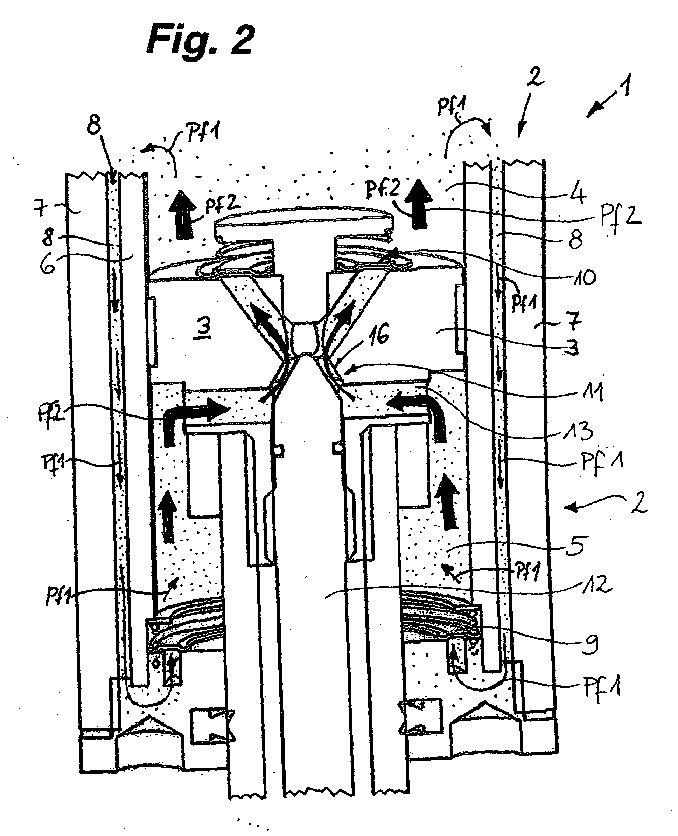

Für die Druckstufendämpfung und die Zugstufendämpfung sind voneinander abgekoppelte, unterschiedliche Strömungswege des Hydraulikmediums vorgesehen, die in Fig. 2 mit dünnen Pfeilen Pf1 bei Druckstufendämpfung und dicken Pfeilen Pf2 bei einer Zugstufendämpfung gekennzeichnet sind.
Die Zugstufendämpfung und die Druckstufendämpfung sind über Rückschlagventile 9,10 voneinander getrennt .
Der Ringspaltraum 8 ist mit dem bei Druckbeaufschlagung einen Kompressionsraum bildenden Druckstufen-Zylinderraum 4 direkt und mit dem bei Zugbeaufschlagung einen Kompressionsraum bildenden Zugstufen-Zylinderraum 5 über ein Druckstufen-Rückschlagventil 9, das zur Durchströmung vom Ringspaltraum 8 zum Zugstufen-Zylinderraum 5 öffnet, verbunden.

Zwischen den beiden Zylinderräumen 4,5 ist ein Zugstufen-Rückschlagventil 10 angeordnet, das zur Durchströmung vom Zugstufen-Zylinderraum 5 in den Druckstufen-Zylinderraum 4 öffnet. Das Zugstufen-Rückschlagventil 10 ist im Dämpfungskolben 3 integriert .

Wie aus Fig. 1 und Fig. 2 ersichtlich, fließt die durch Punkte gekennzeichnete Hydraulikflüssigkeit bei einer Druckstufendämpfung gemäß den Pfeilen Pf1 aus dem Druckstufen-Zylinderraum 4 über Überströmöffnungen 15 (Fig.1) in den Ringspaltraum 8. Von dem Ringspaltraum 8 passiert die Hydraulikflüssigkeit auf dem Weg in den Zugstufen-Zylinderraum 5 das Druckstufen-Rückschlagventil 9, während das Zugstufen-Rückschlagventil 10 geschlossen bleibt.
Für die Druckstufendämpfung ist eine elektrorheologisch veränderbare Dämpfung vorgesehen, wobei die innere Zylinderwand 6 und die äußere Zylinderwand 7 mit dem Ringspaltraum 8 Teile des elektrorheologischen Systems sind. Die Zylinderwände bilden dabei Elektroden und die Fließeigenschaften der im Ringspaltraum 8 befindlichen Hydraulikflüssigkeit sind durch eine an die Elektroden angelegte Spannung oder gegebenenfalls durch ein elektromagnetisches Feld im Ringspaltraum 8 (elektrorheologisch) veränderbar.

Bei der Zugstufendämpfung bewegt sich der Dämpfungskolben 3 bei geschlossenem Druckstufen-Rückschlagventil 9 axial nach unten in Richtung Druckstufen-Rückschlagventil 9. Der Strömungsweg zum Volumenausgleich der Hydraulikflüssigkeit zwischen den Zylinderräumen 4,5 verläuft bei der Zugstufendämpfung vom Zugstufen-Zylinderraum 5 durch das Zugstufen-Rückschlagventil 10 in den Druckstufen-Zylinderraum 4.
Somit gelangt die Hydraulikflüssigkeit nur bei der Druckstufendämpfung durch den elektrorheologischen Ringspaltraum 8, während bei der Zugstufendämpfung der Strömungsweg der Hydraulikflüssigkeit direkt durch den Dämpfungskolben 3 hindurch verläuft.

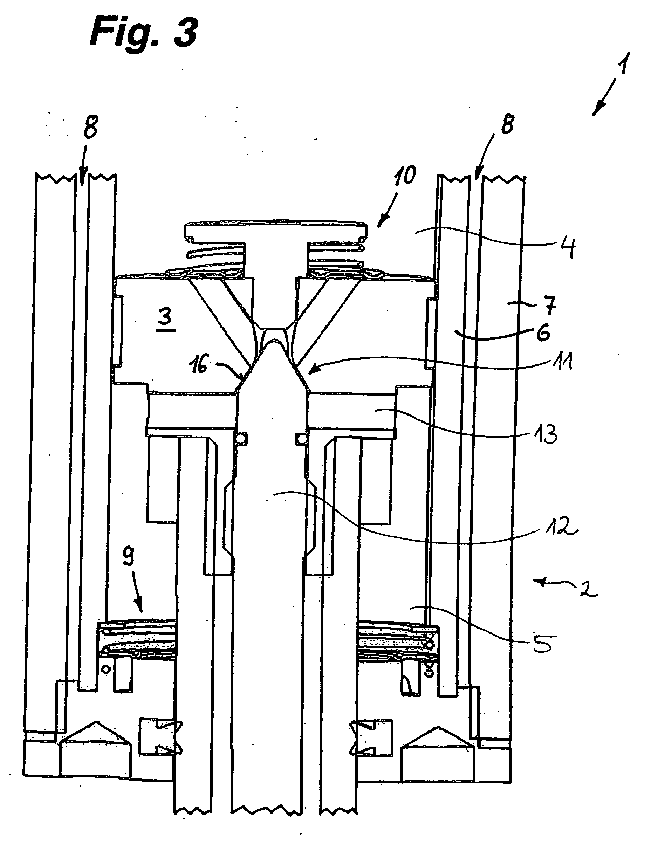

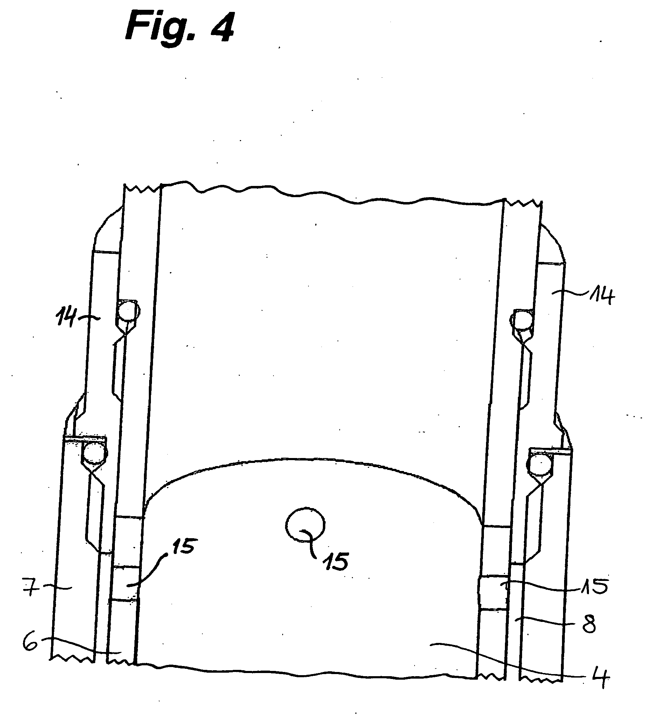

In dem in Fig. 2 dargestellten Teilbereich eines Ausführungsbeispiels des erfindungsgemäßen Dämpfers 1 ist zur Einstellung des Durchflusses durch das Zugstufen-Rückschlagventil 10 ein Nadelventil 11 vorgesehen, das eine Ventilnadel 12 und einen in einem Zuströmkanal 13 des Zugstufen-Rückschlagventils 10 befindlichen Ventilsitz 16 aufweist. In Fig. 2 ist das Nadelventil 11 in einer Offenstellung und in Fig. 3 in Schließstellung dargestellt.
Die Regulierung des Durchflusses der Hydraulikflüssigkeit durch das in Reihe zu dem Zugstufen-Rückschlagventil 10 angeordnete Nadelventil 11 beeinflusst die Zugstufendämpfung unabhängig von der Druckstufendämpfung. Umgekehrt hat eine zum Beispiel elektrorheologische Druckstufendämpfung keinen Einfluss auf die Zugstufendämpfung.
Wie bereits vorerwähnt, bilden bei der elektrorheologischen Druckstufendämpfung die innere Zylinderwand 6 und die äußere Zylinderwand 7 zur elektrorheologischen Beaufschlagung der im Ringspaltraum 8 befindlichen Hydraulikflüssigkeit Elektroden. Die Fließeigenschaften der Hydraulikflüssigkeit im Ringspaltraum 8 sind dadurch regulierbar, wodurch die Dämpfungseigenschaften der Druckstufendämpfung veränderbar sind.
Wie in Fig. 4 erkennbar, sind die innere Zylinderwand 6 und die äußere Zylinderwand 7 durch ein elektrisch isolierendes Verbindungsstück 14 verbunden. Gleichzeitig kann das Verbindungsstück 14 als Abstandshalter zur Bildung des Ringspaltraums 8 zwischen der inneren Zylinderwand 6 und der äußeren Zylinderwand 7 und zur Fixierung der inneren Zylinderwand 6 dienen.

Im Ausführungsbeispiel gemäß Fig. 3 ist der Dämpfungskolben 3 im Schließzustand dargestellt. Dabei schließt die Ventilnadel 12 die Zuströmkanäle 13 flüssigkeitsdicht ab. In diesem Schließzustand ist die Zugstufendämpfung blockiert.

Erwähnt sei noch, dass zur Einstellung des Durchflusses durch das Zugstufen-Rückschlagventil 10 auch ein Verstellventil vorgesehen sein kann, das zum Verschließen der Durchflussöffnungen ein Ventilplättchen aufweist, welches über einen mittels einer Verstellnadel axial verstellbaren Gegenhalter in Schließrichtung federbeaufschlagbar ist. Gegebenenfalls kann der Dämpfungskolben 3 am Austrittsende seiner Durchflussöffnungen bei im Auflagebereich auf den Durchflussöffnungen sich nach außen konisch verjüngenden Ventilplättchen Schrägflächen aufweisen.

## Patentansprüche

1. Dämpfer (1), insbesondere für Zweiräder, der einen Zylinder (2) und einen darin geführten Dämpfungskolben (3) aufweist, wobei beiderseitig des Dämpfungskolbens (3) befindliche Zylinderräume (4,5) mit Flüssigkeit als Dämpfungsmedium gefüllt sind, wobei für einen Einfedervorgang eine Druckstufendämpfung und für einen Ausfedervorgang eine Zugstufendämpfung vorgesehen ist, wobei für die Druckstufendämpfung und die Zugstufendämpfung voneinander abgekoppelte, unterschiedliche Strömungswege des Hydraulikmediums vorgesehen sind, **dadurch gekennzeichnet, dass** die Druckstufendämpfung elektrorheologisch oder magnetorheologisch und die Zugstufendämpfung hydraulisch regulierbar ist.

2. Dämpfer nach Anspruch 1, **dadurch gekennzeichnet, dass** die Zugstufendämpfung und die Druckstufendämpfung über Rückschlagventile (9,10) voneinander getrennt sind.

3. Dämpfer nach einem der Ansprüche 1 oder 2, **dadurch gekennzeichnet, dass** bei einer elektrorheologischen Dämpfung, insbesondere einer elektrorheologischen Druckstufendämpfung, eine Mess- und Einstellvorrichtung zur Messung der Stromaufnahme der elektrorheologischen Dämpfungseinrichtung und zur Verstellung der Dämpfung in Abhängigkeit der Stromaufnahme vorgesehen ist.

4. Dämpfer nach einem der Ansprüche 1 bis 3, **dadurch gekennzeichnet, dass** der Zylinder (2) einen Ringspaltraum (8) zwischen einer inneren und einer äußeren Zylinderwand (6,7) aufweist, wobei der Ringspaltraum (8) vorzugsweise Teil der elektrorheologischen Druckstufendämpfung ist.

5. Dämpfer nach Anspruch 4, **dadurch gekennzeichnet, dass** der Ringspaltraum (8) mit dem bei Druckbeaufschlagung einen Kompressionsraum bildenden Druckstufen-Zylinderraum (4) direkt und mit dem bei Zugbeaufschlagung einen Kompressionsraum bildenden Zugstufen-Zylinderraum (5) über ein Druckstufen-Rückschlagventil (9), das zur Durchströmung vom Ringspaltraum (8) zum Zugstufen-Zylinderraum (5) öffnet, verbunden ist.

6. Dämpfer nach einem der Ansprüche 1 bis 5, **dadurch gekennzeichnet, dass** zwischen den beiden Zylinderräumen (4,5) ein Zugstufen-Rückschlagventil (10) angeordnet ist, das zur Durchströmung vom Zugstufen-Zylinderraum (5) in den Druckstufen-Zylinderraum (4) öffnet.

7. Dämpfer nach Anspruch 6, **dadurch gekennzeichnet, dass** das Zugstufen-Rückschlagventil (10) in den Dämpfungskolben (3) integriert ist.

8. Dämpfer nach einem der Ansprüche 1 bis 7, **dadurch gekennzeichnet, dass** das Zugstufen-Rückschlagventil (10) zur Beeinflussung der Dämpfungscharakteristik der Zugstufendämpfung verstellbar ist, insbesondere durch Verstellung der Belastung eines Ventilschließorgans.

9. Dämpfer nach einem der Ansprüche 1 bis 8, **dadurch gekennzeichnet, dass** zur Einstellung des Durchflusses durch das Zugstufen-Rückschlagventil (10) ein Nadelventil (11) vorgesehen ist, das eine Ventilnadel (12) und einen in einem Zuströmkanal (13) des Zugstufen-Rückschlagventils (10) befindlichen Ventilsitz (16) aufweist.

10. Dämpfer nach einem der Ansprüche 1 bis 8, **dadurch gekennzeichnet, dass** zur Einstellung des Durchflusses durch das Zugstufen-Rückschlagventil (10) ein Verstellventil vorgesehen ist, das zum Verschließen der Durchflussöffnungen ein Ventilplättchen aufweist, welches über einen mittels einer Verstellnadel axial verstellbaren Gegenhalter in Schließrichtung federbeaufschlagbar ist.

11. Dämpfer nach einem der Ansprüche 1 bis 10, **dadurch gekennzeichnet, dass** der Dämpfungskolben (3) am Austrittsende seiner Durchflussöffnungen Schrägflächen aufweist und dass die Ventilplättchen im Auflagebereich auf den Durchflussöffnungen sich nach außen konisch verjüngend ausgebildet sind.

12. Dämpfer nach einem der Ansprüche 1 bis 11, **dadurch gekennzeichnet, dass** die innere und äußere Zylinderwand (6,7) durch ein elektrisch isolierendes Verbindungsstück (14) verbunden sind und zur elektrorheologischen Beaufschlagung des im Ringspaltraum (8) befindlichen Hydraulikmediums Elektroden bilden.

13. Dämpfer nach einem der Ansprüche 1 bis 12, **dadurch gekennzeichnet, dass** ein Ausgleichsbehälter mit einem darin geführten Trennkolben mit der inneren Zylinderwand (6) verbunden ist.

14. Dämpfer nach Anspruch 13, **dadurch gekennzeichnet, dass** der Ausgleichsbehälter als zylinderförmiger Aufsatz auf der inneren Zylinderwand (6) ausgebildet ist und dass das isolierende Verbindungsstück (14) zum Verbinden und zur axialen Fixierung dient.

15. Dämpfer nach Anspruch 13 oder 14, **dadurch gekennzeichnet, dass** der Trennkolben eine Aufnahmekammer als Auffangeinrichtung für in der Hydraulikflüssigkeit befindliche, gasförmige Anteile aufweist und dass die Aufnahmekammer des Trennkolbens mit dem Druckstufen-Zylinderraum (4) über wenigstens einen Verbindungskanal verbunden ist.

16. Dämpfer nach einem der Ansprüche 1 bis 15, **dadurch gekennzeichnet, dass** der obere Endbereich der inneren Zylinderwand (6) als Ausgleichsbehälter vorgesehen ist.

17. Dämpfer nach einem der Ansprüche 1 bis 16, **dadurch gekennzeichnet, dass** die innere Zylinderwand (6) an ihrem oberen Endbereich eine stufenartige Querschnittsverringerung aufweist und dass das Verbindungsstück auf diese Stufe aufgesetzt ist.

18. Dämpfer nach einem der Ansprüche 13 bis 17, **dadurch gekennzeichnet, dass** der Ausgleichsbehälter an seinem äußeren Ende eine durch den Trennkolben abgetrennte äußere Kammer aufweist, die als dichte Luftkammer ausgebildet ist.

19. Dämpfer nach Anspruch 18, **dadurch gekennzeichnet, dass** der Ausgleichsbehälter beziehungsweise die Luftkammer einen Verschlussdeckel aufweist, der ein vorzugsweise als Einschraubventil ausgebildetes Luftventil hat.

20. Dämpfer nach einem der Ansprüche 1 bis 19, **dadurch gekennzeichnet, dass** der Dämpfer (1) Teil einer Federgabel und/oder eines Federbeins für Hinterbauten, insbesondere bei einem Zweirad, ist.

## Claims

1. Damper (1), particularly for two-wheeled vehicles, which comprises a cylinder (2) and a damping piston (3) guided therein, wherein cylinder chambers (4, 5) located on both sides of the damping piston (3) are filled with liquid as damping medium, wherein a compression stage damping is provided for a spring loading process and a tension stage damping is provided for a spring release process, wherein different flow paths for the hydraulic medium are provided which are disengaged from one another for the compression stage damping and tension stage damping, **characterised in that** the compression stage damping can be regulated electrorheologically or magnetorheologically and the tension stage damping can be regulated hydraulically.

2. Damper according to claim 1, **characterised in that** the compression stage damping and tension stage damping are separated from one another by non-return valves (9, 10).

3. Damper according to one of claims 1 or 2, **characterised in that** in electrorheological damping, particularly electrorheological compression stage damping, a measuring and setting apparatus is provided for measuring the current consumption of the electrorheological damping device and for adjusting the damping as a function of the current consumption.

4. Damper according to one of claims 1 to 3, **characterised in that** the cylinder (2) comprises an annular space (8) between an inner and outer cylinder wall (6, 7), the annular space (8) preferably being part of the electrorheological compression stage damping.

5. Damper according to claim 4, **characterised in that** the annular space (8) is directly connected to the compression stage cylinder chamber (4) that forms a compression chamber when subjected to the application of pressure, and is connected to the tension stage cylinder chamber (5) that forms a compression chamber when subjected to the application of pressure via a compression stage non-return valve (9) that opens to allow flow from the annular space (8) to the tension stage cylinder chamber (5).

6. Damper according to one of claims 1 to 5, **characterised in that** between the two cylinder chambers (4, 5) is provided a compression stage non-return valve (10) which opens to allow flow from the tension stage cylinder chamber (5) into the compression stage cylinder chamber (4).

7. Damper according to claim 6, **characterised in that** the tension stage non-return valve (10) is integrated in the damping piston (3).

8. Damper according to one of claims 1 to 7, **characterised in that** the tension stage non-return valve (10) is adjustable for influencing the damping characteristics of the tension stage damping, in particular by adjusting the load on a valve closing member.

9. Damper according to one of claims 1 to 8, **characterised in that** for adjusting the flow through the tension stage non-return valve (10) a needle valve (11) is provided which comprises a needle (12) and a valve seat (16) located in a feed channel (13) of the tension stage non-return valve (10).

10. Damper according to one of claims 1 to 8, **characterised in that** for adjusting the flow through the tension stage non-return valve (10) an adjusting valve is provided which comprises, for the purpose of closing off the flow apertures, a valve plate which can be spring-biased in the closing direction by means of a brace that is axially adjustable by means of an adjusting needle.

11. Damper according to one of claims 1 to 10, **characterised in that** the damping piston (3) comprises sloping surfaces at the outlet end of its flow apertures and **in that** the valve plates are designed so as to taper conically towards the outside in the region of contact with the flow apertures.

12. Damper according to one of claims 1 to 11, **characterised in that** the inner and outer cylinder wall (6, 7) are connected by an electrically insulating connecting member (14) and form electrodes for subjecting the hydraulic medium contained in the annular space (8) to electrorheological forces.

13. Damper according to one of claims 1 to 12, **characterised in that** a compensating container with a separating piston guided therein is connected to the inner cylinder wall (6).

14. Damper according to claim 13, **characterised in that** the compensating container is constructed as a cylindrical attachment on the inner cylinder wall (6) and **in that** the insulating connecting member (14) serves for connection and for axial fixing.

15. Damper according to claim 13 or 14, **characterised in that** the separating piston has a receiving chamber as a means for trapping gaseous components contained in the hydraulic liquid, and **in that** the receiving chamber of the separating piston is connected to the compression stage cylinder chamber (4) via at least one connecting channel.

16. Damper according to one of claims 1 to 15, **characterised in that** the upper end region of the inner cylinder wall (6) is intended as a compensating container.

17. Damper according to one of claims 1 to 16, **characterised in that** the inner cylinder wall (6) has a step-like reduction in cross-section at its upper end region and **in that** the connecting member is fitted onto this step.

18. Damper according to one of claims 13 to 17, **characterised in that** the compensating container comprises, at its outer end, an outer chamber separated off by the separating piston, which is constructed as a sealed air chamber.

19. Damper according to claim 18, **characterised in that** the compensating container or the air chamber has a closure lid which has an air valve preferably in the form of a screw-in valve.

20. Damper according to one of claims 1 to 19, **characterised in that** the damper (1) is part of a suspension fork and/or a suspension strut for rear structures, particularly on a two-wheeled vehicle.

## Revendications

1. Amortisseur (1), en particulier pour véhicules à deux roues, qui présente un cylindre (2) et un piston d'amortissement (3) guidé dans ce cylindre, sachant que des chambres de cylindre (4, 5) se trouvant de part et d'autre du piston d'amortissement (3) sont remplies de liquide comme fluide d'amortissement, sachant qu'il est prévu un amortissement à étages de pression pour un processus de rabattement et un amortissement à étages de traction pour un processus de débattement, sachant que des chemins d'écoulement différents du fluide hydraulique, désolidarisés l'un de l'autre, sont prévus pour l'amortissement à étages de pression et l'amortissement à étages de traction, **caractérisé en ce que** l'amortissement à étages de pression peut être régulé électro-rhéologiquement ou magnéto-rhéologiquement, et l'amortissement à étages de traction hydrauliquement.

2. Amortisseur selon la revendication 1, **caractérisé en ce que** l'amortissement à étages de traction et l'amortissement à étages de pression sont séparés l'un de l'autre par des clapets antiretour (9, 10),

3. Amortisseur selon la revendication 1 ou 2, **caractérisé en ce que**, pour un amortissement électro-rhéologique, notamment pour un amortissement à étages de pression électro-rhéologique, il est prévu un dispositif de mesure et de réglage pour mesurer la consommation électrique de l'équipement d'amortissement électro-rhéologique et pour régler l'amortissement en fonction de la consommation électrique.

4. Amortisseur selon l'une des revendications 1 à 3, **caractérisé en ce que** le cylindre (2) présente un espace interstitiel annulaire (8) entre une paroi intérieure de cylindre (6) et une paroi extérieure de cylindre (7), sachant que l'espace interstitiel annulaire (8) fait de préférence partie de l'amortissement électro-rhéologique à étages de pression.

5. Amortisseur selon la revendication 4, **caractérisé en ce que** l'espace interstitiel annulaire (8) est directement relié à la chambre de cylindre (4) à étages de pression formant une chambre de compression lors de la sollicitation en pression, et est relié à la chambre de cylindre (5) à étages de traction, formant une chambre de compression lors de la sollicitation en traction, par l'intermédiaire d'un clapet antiretour (9) à étages de pression qui s'ouvre pour permettre l'écoulement depuis l'espace interstitiel annulaire (8) vers la chambre de cylindre (5) à étages de traction.

6. Amortisseur selon l'une des revendications 1 à 5, **caractérisé en ce qu'**un clapet antiretour (10) à étages de traction est disposé entre les deux chambres de cylindre (4, 5), qui s'ouvre pour permettre l'écoulement de la chambre de cylindre (5) à étages de traction dans la chambre de cylindre (4) à étages de pression.

7. Amortisseur selon la revendication 6, **caractérisé en ce que** le clapet antiretour (10) à étages de traction est intégré dans le piston d'amortissement (3).

8. Amortisseur selon l'une des revendications 1 à 7, **caractérisé en ce que** le clapet antiretour (10) à étages de traction peut être réglé afin d'agir sur la caractéristique d'amortissement de l'amortissement à étages de traction, en particulier en réglant la sollicitation d'un obturateur de clapet.

9. Amortisseur selon l'une des revendications 1 à 8, **caractérisé en ce que**, afin de régler l'écoulement à travers le clapet antiretour (10) à étages de traction, il est prévu une soupape à pointeau (11) qui présente un pointeau de soupape (12) et un siège de soupape (16) se trouvant dans un canal de flux entrant (13) du clapet antiretour (10) à étages de traction.

10. Amortisseur selon l'une des revendications 1 à 8, **caractérisé en ce que** , afin de régler l'écoulement à travers le clapet antiretour (10) à étages de traction, il est prévu une soupape de réglage qui, afin de fermer les ouvertures d'écoulement, présente une plaquette de soupape qui peut être sollicitée par ressort dans la direction de fermeture par l'intermédiaire d'un élément de contre-appui pouvant être déplacé axialement au moyen d'un pointeau de réglage.

11. Amortisseur selon l'une des revendications 1 à 10, **caractérisé en ce que** le piston d'amortissement (3) présente à l'extrémité de sortie de ses ouvertures d'écoulement des surfaces obliques, et **en ce que** les plaquette de soupape sont réalisées en se rétrécissant coniquement vers l'extérieur dans la région d'appui sur les ouvertures d'écoulement.

12. Amortisseur selon l'une des revendications 1 à 11, **caractérisé en ce que** la paroi intérieure de cylindre (6) et la paroi extérieure de cylindre (7) sont reliées par un élément de liaison (14) électriquement isolant, et forment des électrodes pour la sollicitation électro-rhéologique du fluide hydraulique se trouvant dans l'espace interstitiel annulaire (8).

13. Amortisseur selon l'une des revendications 1 à 12, **caractérisé en ce qu'**un réservoir de compensation dans lequel est guidé un piston de séparation est relié à la paroi intérieure de cylindre (6).

14. Amortisseur selon la revendication 13, **caractérisé en ce que** le réservoir de compensation est réalisé sous forme de couronnement cylindrique sur la paroi intérieure de cylindre (6), et **en ce que** l'élément de liaison isolant (14) sert à la liaison et à la fixation en position axiale.

15. Amortisseur selon la revendication 13 ou 14, **caractérisé en ce que** le piston de séparation présente une chambre réceptrice comme équipement collecteur pour les constituants gazeux se trouvant dans le liquide hydraulique, et **en ce que** la chambre réceptrice du piston de séparation est reliée à la chambre de cylindre (4) à étages de pression par l'intermédiaire d'au moins un canal de liaison.

16. Amortisseur selon l'une des revendications 1 à 15, **caractérisé en ce que** la région terminale supérieure de la paroi intérieure de cylindre (6) est prévue comme réservoir de compensation.

17. Amortisseur selon l'une des revendications 1 à 16, **caractérisé en ce que** la paroi intérieure de cylindre (6) présente dans sa région terminale supérieure un rétrécissement de section du genre gradin, et **en ce que** l'élément de liaison est installé sur ce gradin.

18. Amortisseur selon l'une des revendications 13 à 17, **caractérisé en ce que** le réservoir de compensation présente à son extrémité extérieure une chambre extérieure séparée par le piston de séparation, qui est réalisée sous forme de chambre d'air étanche.

19. Amortisseur selon la revendication 18, **caractérisé en ce que** le réservoir de compensation ou la chambre d'air présente un couvercle de fermeture qui possède une soupape d'air réalisée de préférence sous forme de soupape vissée.

20. Amortisseur selon l'une des revendications 1 à 19, **caractérisé en ce que** l'amortisseur (1) fait partie d'une fourche à suspension et/ou d'une jambe de suspension pour des structures arrière, en particulier pour un véhicule à deux roues.
